# EUROPEAN PATENT SPECIFICATION

(11) **EP 3 938 663 B1**
(45) Date of publication and mention of the grant of the patent: **01.11.2023**
(21) Application number: 20713373.7
(22) Date of filing: 04.03.2020
(51) Int. Cl.: F16B 12/20

(54) **JOINING DEVICE FOR FURNITURE PANELS**
VERBINDUNGSVORRICHTUNG FÜR MÖBELPANEELE
DISPOSITIF D'ASSEMBLAGE POUR PANNEAUX DE MEUBLE

(30) Priority: 13.03.2019 IT 201900003619
(43) Date of publication of application: 19.01.2022
(73) Proprietor: LEONARDO S.r.l., 22060 Figino Serenza (CO) (IT)
(72) Inventor: CATTANEO, Carlo, 22060 Figino Serenza (CO) (IT)
(74) Representative: Franco Martegani S.r.l.
(86) International application number: PCT/IB2020/051854
(87) International publication number: WO 2020/183296

(56) References cited:
- EP-A1- 1 473 468
- WO-A1-2015/158622
- DE-A1-102011 009 334
- DE-U1- 20 302 306
- US-A- 4 158 335

## Description

The present invention relates to a joining device between two panels of furniture or other furnishing items, in particular between a shoulder and a shelf.

In the field of furniture and other furnishing items in general that use panels, various types of joining and blocking systems between two panels that must be stably connected, for example between a shoulder and a shelf, are known. In this description, the generic term "shelf" means above all a base or a top, as well as any intermediate shelf of a piece of furniture.

In general, the positioning of joints in panels is easy as a protruding pin is provided in a first panel (for example a shoulder) and elements for receiving and blocking the pin in a second panel (for example a base or shelf), both arranged in relative holes of the two panels.

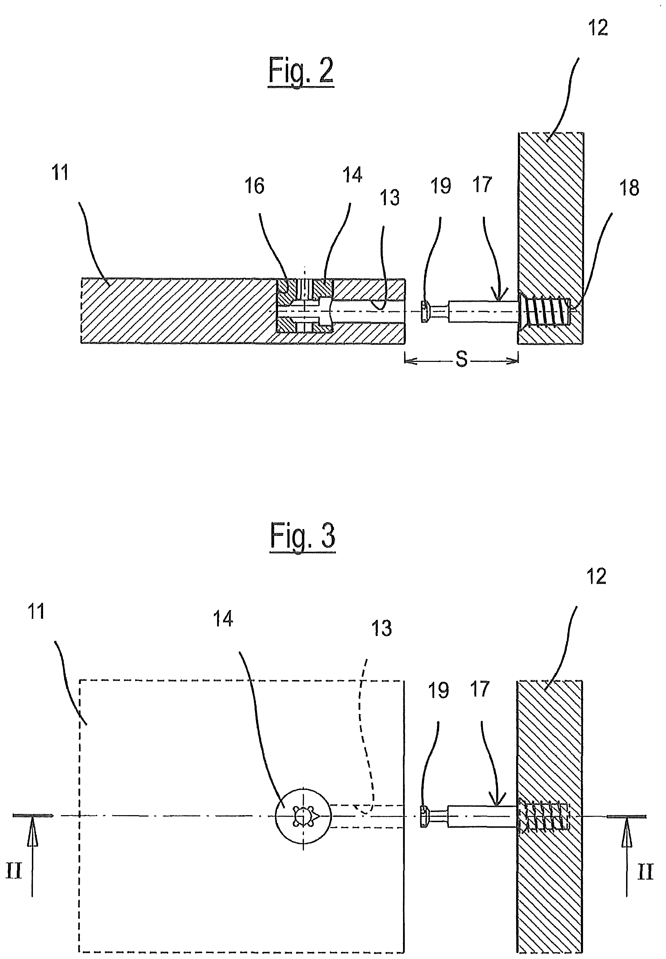

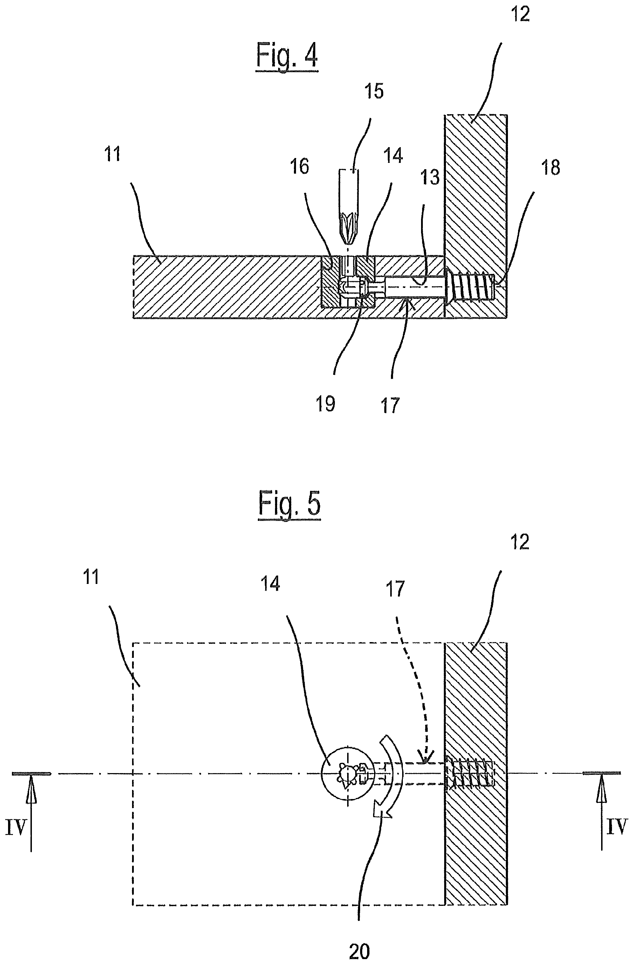

Figures 2, 3, 4 and 5 show a typical example of a joint in which a first panel 11, such as a horizontal base or shelf i.e. parallel to the floor or walking surface, must be connected to a second panel 12, such as a shoulder vertical i.e. perpendicular with respect to both the floor P and the first panel 11. The first panel 11 has at one end of its first horizontal blind hole 13, an eccentric joint 14 which can be actuated with a screwdriver 15. The eccentric joint 14 is arranged in the panel 11 in a second vertical blind hole thereof 16 perpendicular to the first hole 13 to cross the first hole 13. A pin 17, on the other hand, is arranged in the second panel or shoulder 12, in a bush or simply screwed into a hole 18 horizontal with respect to the floor. The pin 17 protrudes from the second panel 12 so that it can be inserted and fitted into the hole 13 of the first panel 11 and reach the eccentric joint 14 with an end head 19 thereof. Figures 2 and 3 show a sectional and plan view of the extracted or exploded position of the parts with the shoulder 12 and base 11 detached before being connected to each other. Figures 4 and 5 on the other hand show the two panels 11, 12 adjacent to each other, with the pin 17 inserted in the hole 13 of the shelf 11 and blocked by means of the eccentric joint 14 rotated according to the arrow 20 by means of the screwdriver 15.

Above all from figures 2 and 3 it can be seen that in order to be able to be brought closer and coupled, the two panels 11, 12 must be kept at a certain distance S, at least equal to that of the part T of the pin 17 protruding from the shoulder 12 so as to allow their insertion in hole 13.

The blocking actuation of these joints is then effected in a wide variety of ways and with the most diverse devices, well known to persons skilled in the art. Similar joining devices are known for example from DE 203 02 306 U1 and EP 1 473 468 A1.

This arrangement does not have any particular problems given the variety of solutions available when the connection between the panels takes place in an open space that is easily accessible and in which the two panels to be joined and coupled can be easily moved together.

Furthermore, in some of these applications, the parts of furniture or furnishing item, i.e. the above-mentioned panels, can or must be positioned in extremely narrow spaces, in particular in width, with difficulty for the approaching operations between the same before tightening and blocking the joint, for example between the shoulders and shelves or bases.

A particular condition is that in which the furniture must be arranged in a recess with an extremely limited free space between the shoulders 12 and the side walls V parallel to said shoulders 12.

The joining example of the figures described above causes a serious problem when the panels must be mounted in a recess that is extremely limited in its width, as it is not possible to drag the assembled furniture or connected panels 11, 12 outside the recess as they must be mounted inside the same.

For these specific cases, solutions with a relatively suitable functioning have been studied and used but that involve both problems of difficult assembly and also problems relating to a particular construction complication of the joint which make them expensive on the one hand, and on the other delicate and not always satisfactorily functional due to their difficult access.

The general objective of the present invention is therefore to provide a joining device between two panels of furniture or other furnishing items, in particular between a shoulder and a shelf, capable of solving the above-mentioned drawbacks of the prior art in a simple, economic and functional manner.

A further objective of the present invention is to provide a joining device between two panels that has a minimum encumbrance, at the same time being quite easily accessible from extremely minimal spaces between the shoulder panels of the furniture or furnishing item and the side walls of the recess in which it must be arranged and assembled.

Another objective of the present invention is to provide a joining device that can be used both between the shoulder and the base or shelf, and between the shoulder and the top and that can be used in any type of connection between two panels of a piece of furniture or furnishing item.

Yet another objective of the present invention is to provide a joining device which allows immediate and automatic positioning and blocking.

The above objectives are achieved by a joining device for panels of furniture or other furnishing items produced according to independent claim 1 and the following sub-claims.

The structural and functional characteristics of the present invention and its advantages with respect to the known art will appear even more evident from the following description, referring to the attached schematic drawings, which show embodiment examples of the invention itself, all having the same innovative concept. In the drawings:
- figure 1 is a plan view from above of an environment in which a piece of furniture is provided with joining devices according to the prior art;
- figures 2 and 3 are a sectional view and a plan view showing a joining device of those used in the furniture of figure 1 with parts exploded with respect to the panels in which they are applied for their stable connection;
- figures 4 and 5 are a sectional view and a plan view showing the joining device shown in Figures 2 and 3 when tightened to firmly connect the panels;
- figure 6 is a plan view from above of an environment where a piece of furniture equipped with a joining device according to the present invention is arranged;
- figures 7 and 8 are a sectional view and a plan view showing a joining device according to the present invention in a first embodiment with parts inserted in panels of a piece of furniture as shown in figure 6 with panels exploded before their stable connection;
- figures 7b and 8b are views similar to those of figures 7 and 8 with the parts of the joining device according to the present invention partially coupled with each other in a first assembly step in which the coupling between the parts is effected;
- figures 7c and 8c are views similar to those of figures 7 and 8 with the parts of the joining device according to the present invention tightened together once the assembly with the tightening of the joining device has been completed;
- figures 9 and 10 show a perspective view of the parts of the joining device shown in figures 7 and 8 exploded together and the sectional elements of figure 7 respectively in an exploded perspective view;
- figures 11 and 12 are a sectional view and a plan view showing a joining device according to the present invention in a second embodiment with parts inserted in panels of a piece of furniture exploded together before their stable connection;
- figures 11b and 12b are views similar to those of figures 11 and 12 with the parts of the joining device according to the present invention partially coupled together in a first assembly step in which the coupling between the parts is effected;
- figures 11c and 12c are views similar to those of figures 11 and 12 with the parts of the joining device according to the present invention tightened together once the assembly with the tightening of the joining device has been completed;
- figures 13 and 14 show a perspective view of the parts of the joining device shown in figures 11 and 12 exploded together and the sectional elements of figure 11 respectively in an exploded perspective view;
- figures 15 and 16 are a sectional view and a plan view showing a joining device according to the present invention in a third embodiment with parts inserted in panels of a piece of furniture exploded together before their stable connection;
- figures 15b and 16b are views similar to those of figures 15 and 16 with the parts of the joining device according to the present invention partially coupled together in a first assembly step in which the coupling between the parts is effected;
- figures 15c and 16c are views similar to those of figures 15 and 16 with the parts of the joining device according to the present invention tightened together once the assembly with tightening of the joint has been completed;
- figures 17 and 18 show a perspective view of the parts of the joining device shown in figures 15 and 16 exploded together and the sectional elements of figure 15 respectively in an exploded perspective view;
- figures 19 and 20 are a sectional view and a plan view showing a joining device according to the present invention in a fourth embodiment with parts inserted in panels of a piece of furniture exploded together before their stable connection;
- figures 19b and 20b are views similar to those of figures 19 and 20 with the parts of the joining device according to the present invention partially coupled together in a first assembly step in which the coupling between the parts is effected;
- figures 19c and 20c are views similar to those of figures 19 and 20 with the parts of the joining device according to the present invention tightened together once the assembly with the tightening of the joint has been completed;
- figures 21 and 22 show in a perspective view the parts of the joining device shown in figures 19 and 20 exploded together and the sectional elements of figure 19 respectively in an exploded perspective view;
- figures 23 and 24 are a sectional view and a plan view showing a joining device according to the present invention in a fifth embodiment with parts inserted in panels of a piece of furniture exploded together before their stable connection;
- figures 23b and 24b are views similar to those of figures 23 and 24 with the parts of the joining device according to the present invention partially coupled together in a first assembly step in which the coupling between the parts is effected;
- figures 23c and 24c are views similar to those of figures 23 and 24 with the parts of the joining device according to the present invention tightened together once the assembly with tightening of the joining device has been completed;
- figures 25 and 26 show a perspective view of the parts of the joining device shown in figures 23 and 24 exploded together and the sectional elements of figure 23 respectively in an exploded perspective view;
- figures 27 and 28 are a sectional view and a plan view showing a joining device according to an example not according to the invention with parts inserted in panels of a piece of furniture exploded together before their stable connection;
- figures 27b and 28b are views similar to those of figures 27 and 28 with the parts of the joining device according to an example not according to the invention partially coupled together in a first assembly step in which the coupling between the parts is effected;
- figures 27c and 28c are views similar to those of figures 27 and 28 with the parts of the joining device according to an example not according to the invention tightened together once the assembly with tightening of the joining device has been completed;
- figures 29 and 30 show in a perspective view the parts of the joining device shown in figures 27 and 28 exploded together and the sectional elements of figure 27 respectively in exploded perspective view.

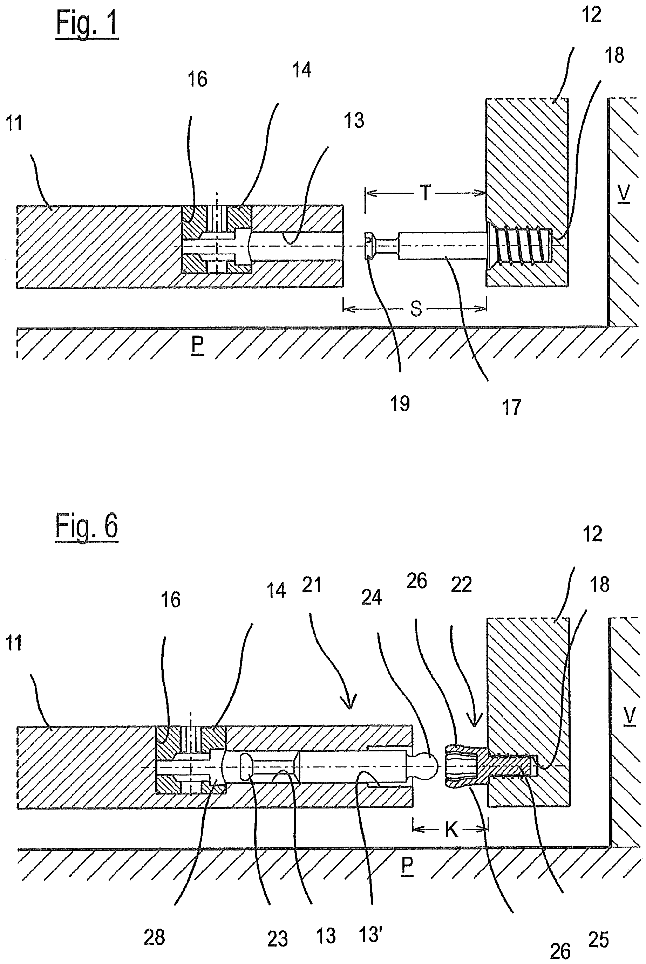

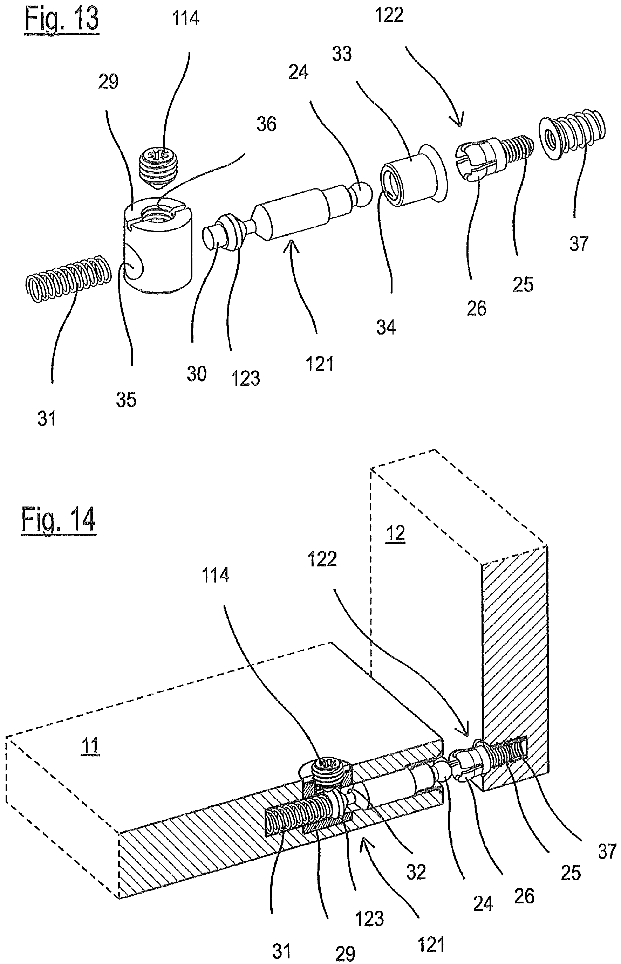

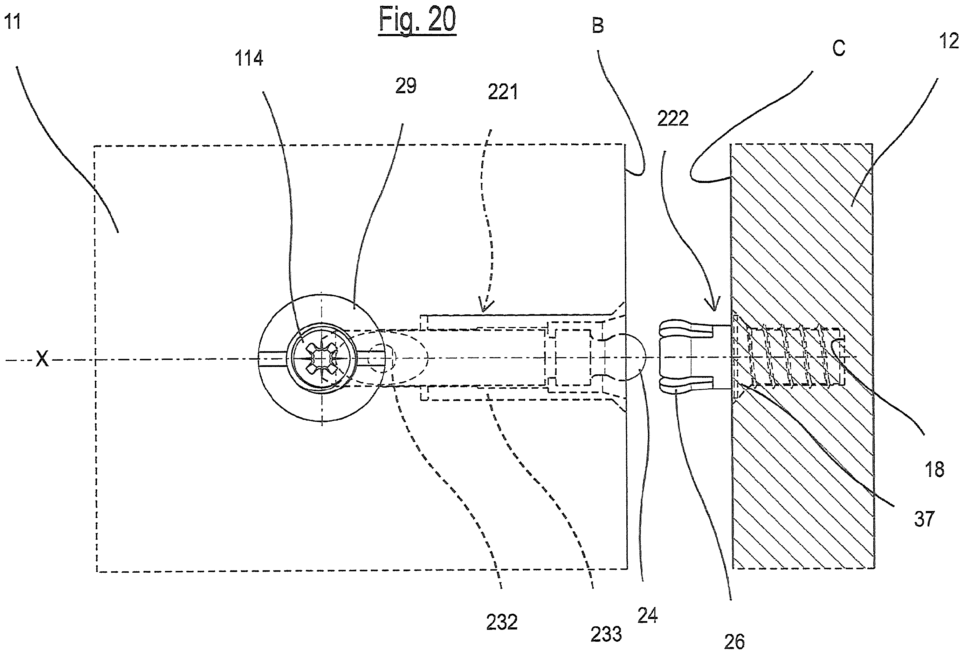

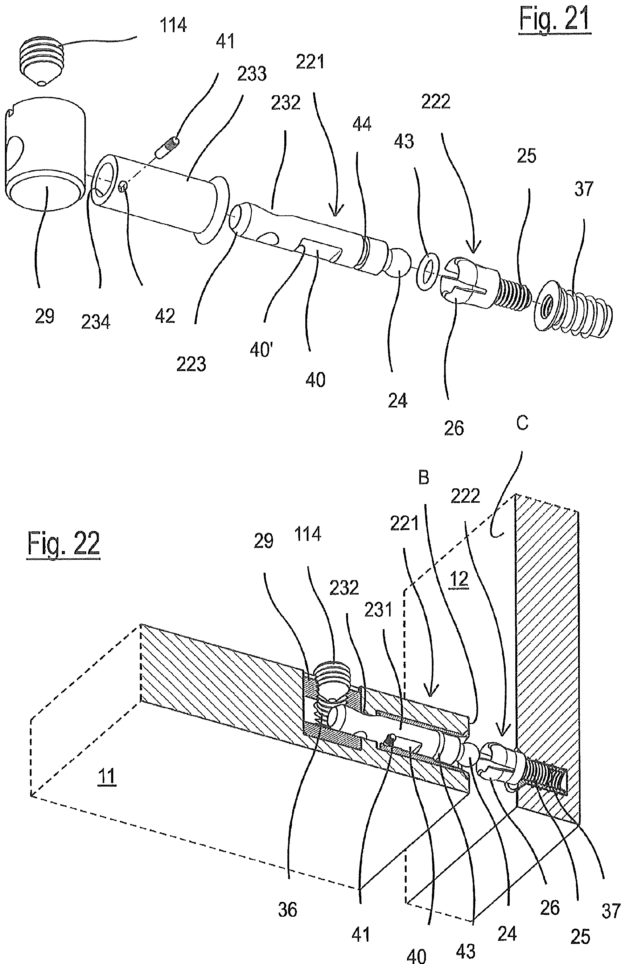

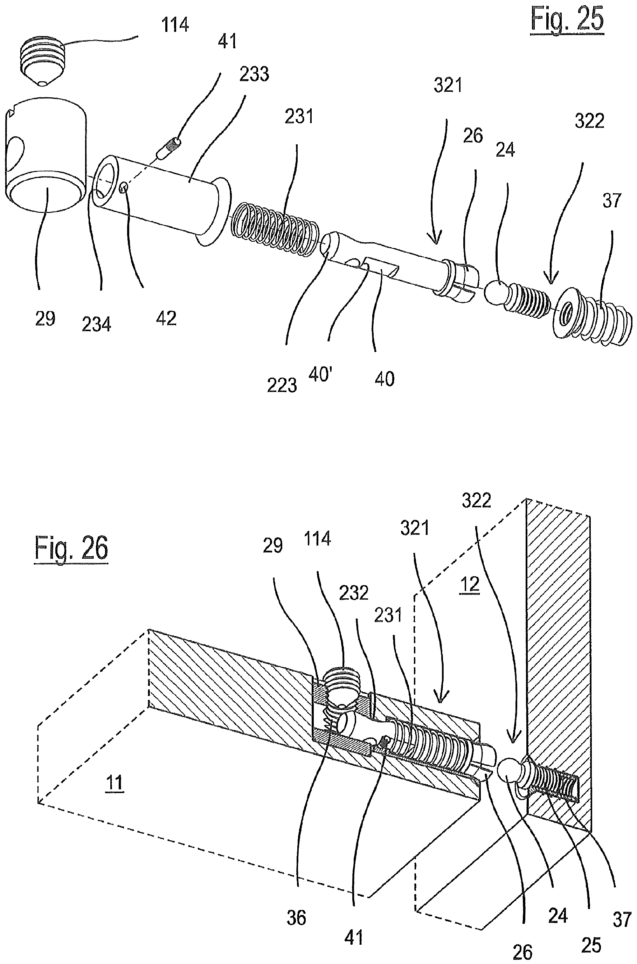

With reference in general to figures 6 to 26, a joining device is shown between two panels of furniture or other furnishing items, in particular between a shoulder and a shelf, according to the present invention.

Figure 6, for example, shows an end part of a recess of an environment in which a piece of furniture is arranged, partially shown therein through its base 11 or first panel and its shoulder 12 or second panel, which must be connected and firmly blocked.

In order to do this and have a distance K much shorter than that S of the state of the art between the two panels 11, 12 before being coupled, a joining device according to the present invention is installed.

On examining figures 6 to 10, for example, in which a first embodiment of a joining device according to the present invention is shown, the following can be observed.

In the joining device between two panels 11, 12 of furniture or other furnishing items, it can be noted that the two panels 11, 12 are positioned perpendicular to each other, i.e. the base 11 horizontally and the shoulder 12 in vertical with respect to an underlying floor P.

As for the example of the state of the art, a first horizontal blind hole 13 is obtained on one side in the base 11 or first panel, which crosses with a vertical 16 and at the internal end of both holes 13, 16, an eccentric joint 14 is arranged for example, that can be actuated with a screwdriver 15. In the second panel or shoulder 12, on the other hand, there is a blind hole 18 horizontal with respect to the floor P, aligned with the first horizontal blind hole 13 of the first panel or base 11 according to an axis X.

Also according to the present invention, the joining device is of the type that a pin or plug extends from a first panel 11 and is inserted in a complementary seat of a second panel 12, and a stable connection and blocking system of said pin or plug is provided inside said seat, which in the non-limiting example shown consists of the above-mentioned eccentric joint 14.

With the joining device assembled and operative, an edge B of the first panel 11 is stably abutted against a surface C of the second panel 12 to obtain the stable coupling between said panels.

The joining device of the present invention is characterized in that said pin or plug is divided into two sections 21, 22, a first section 21 provided on the first panel 11 and a second section 22 provided on the second panel 12. As will be seen, said sections 21, 22 can be axially coupled together releasably in order to allow not only their assembly but also disassembly.

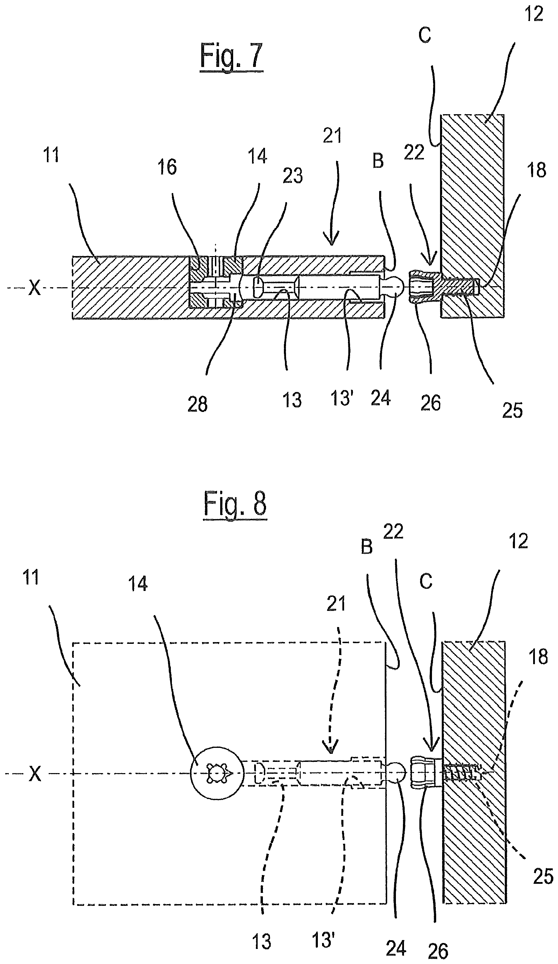

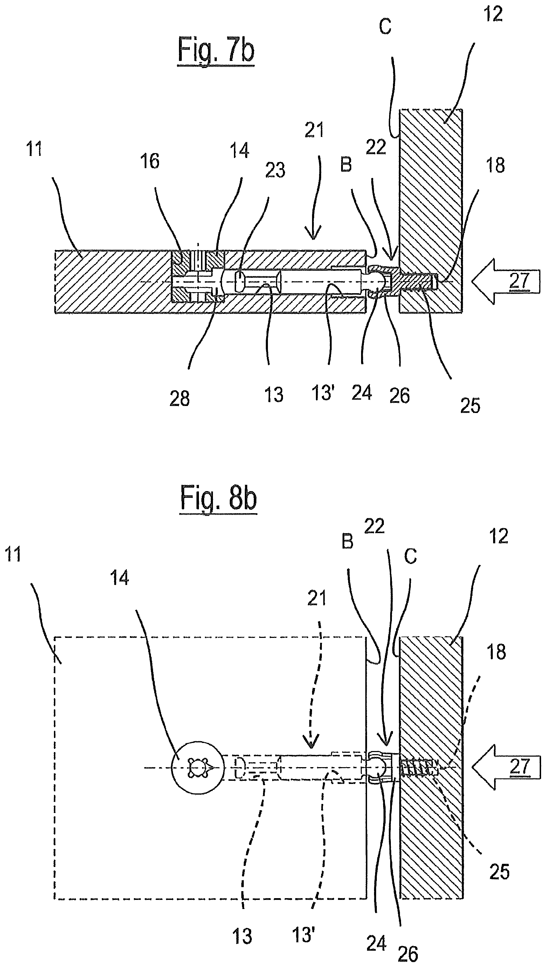

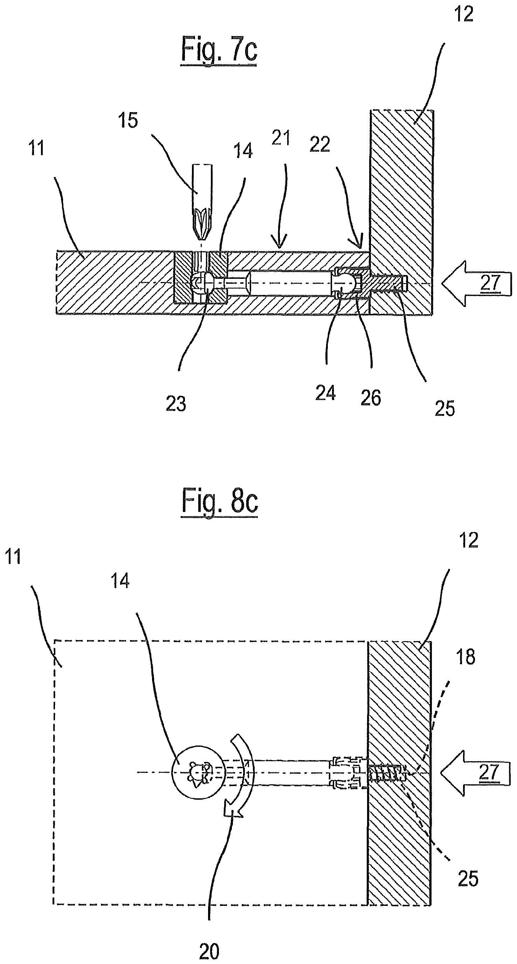

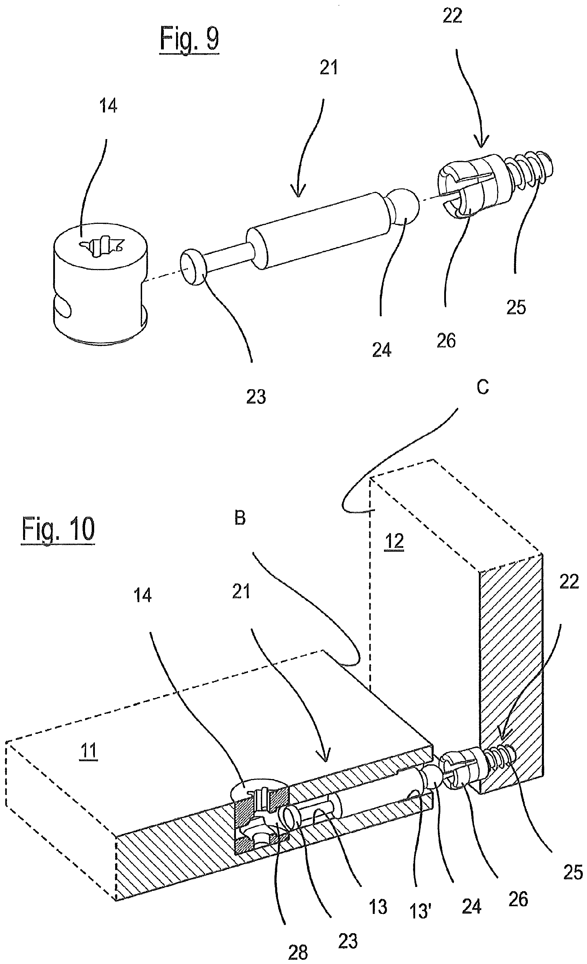

Figures 7 and 9 in particular show how in this first embodiment of a joining device according to the invention, the first section 21 of the pin consists of a male part inserted at least partially in the first horizontal blind hole 13 of the first panel or base 11. Likewise, the second section 22 of the pin consists of a female part which is inserted at least partially into the blind hole 18 formed in the second panel or shoulder 12, aligned with the first hole 13 of the first panel or base 11.

In particular, the figures show how the first section 21 of the pin comprises a cylindrical element or body which extends and provides at an initial end, an enlarged head 23 which is inserted in the eccentric joint 14 to be actuated in traction and blocked by said eccentric joint 14.

At a second end of the first section 21 of the pin, a ball 24 is provided which forms the male end part. This male part can naturally be produced with an enlarged element having another configuration. Furthermore, the second section 22 of the pin comprises a body or threaded stem 25, which is screwed into the second panel or shoulder 12, from which a hollow petal-shaped female element 26 extends, protruding from the shoulder 12 and suitable for receiving the ball 24. The hollow petal-shaped element 26 is preferably elastic so as to snap-receive the ball 24, blocking it therein.

It should also be noted that the first horizontal blind hole 13 of the first panel or base 11 provides an initial portion 13' facing outwardly with a larger diameter to create an enlarged seat so as to be able to receive the hollow petal-shaped element 26 and cause its tightening on the ball 24.

Figure 6 shows how the joining device of the invention allows the two panels 11, 12 to be kept at a minimum distance K from each other which is just enough to allow the assembly of the device itself in operative position. The various components of the device are arranged as indicated above.

From this position (figures 7 and 8), the panels 11, 12 are brought together along an alignment axis X of the holes 13, 18 formed therein, acting according to the arrow 27. In this way it can be noted that the sections 21 and 22 can be axially coupled with each other along said axis X.

The first section 21 of the pin does not move back into the hole 13, as it is arranged therein with a certain friction, when it receives the hollow petal-shaped element 26 during the coupling phase. The action according to the arrow 27 continues so as to cause the engagement of the hollow petal-shaped element 26 on the ball 24 of the second pin section 22 (figures 7b and 8b), which is snap-inserted therein.

This coupling step is followed by a tightening step of the joining device in which, as the panels 11, 12 are moved towards each other according to the arrow 27, the hollow petal-shaped element 26 containing the ball 24 enters the initial section 13' or enlarged seat of the first horizontal blind hole 13 of the first panel or base 11 causing the tightening of the hollow petal-shaped element 26 on the ball 24.

The screwdriver 15 acting on the eccentric joint 14 causes its rotation according to the arrow 20 so as to bring its cavity 28 into engagement on the enlarged head 23 of the cylindrical element or body of the first section 21 of the pin. The enlarged head 23 therefore fits into the eccentric joint 14 to be actuated in traction and blocked by said eccentric joint 14.

The actuation of the eccentric joint 14 pulls the sections 21, 22 of the pin thus coupled, tightening and firmly blocking them due to the fact that the hollow petal-shaped element 26 cannot be released from the ball 24 as it is unable to expand.

The joining device thus acts to firmly abut the edge B of the first panel 11 against the surface C of the second panel 12 creating a stable coupling between the panels 11, 12 (figures 7c and 8c).

It is evident that the sections 21, 22 of the pin can provide, differently from what is shown, one section 22 a ball end and the other 21, an end equipped with a hollow petal-shaped element suitable for receiving the ball by suitably modifying the elements and parts that collaborate with them. This arrangement, not shown, simply represents a technical equivalent.

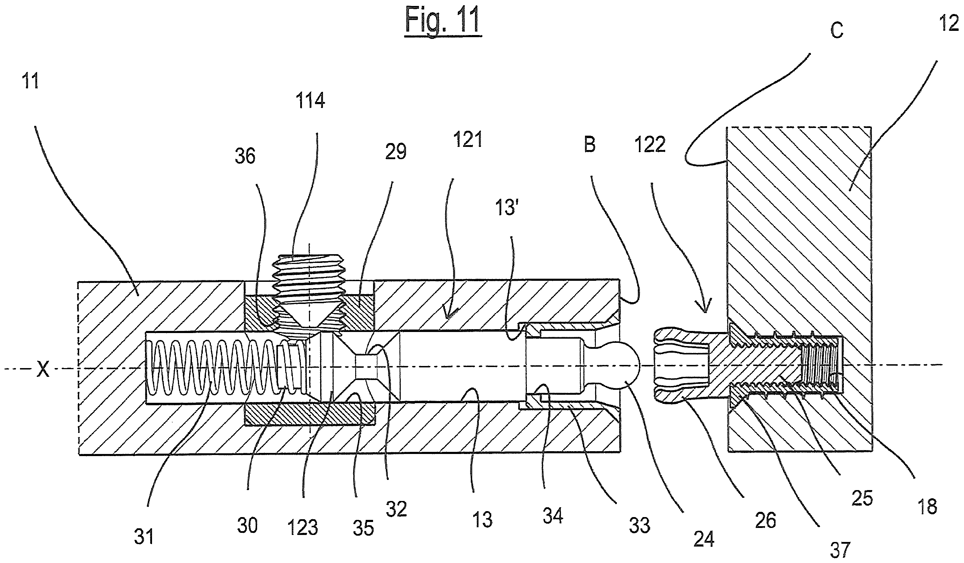

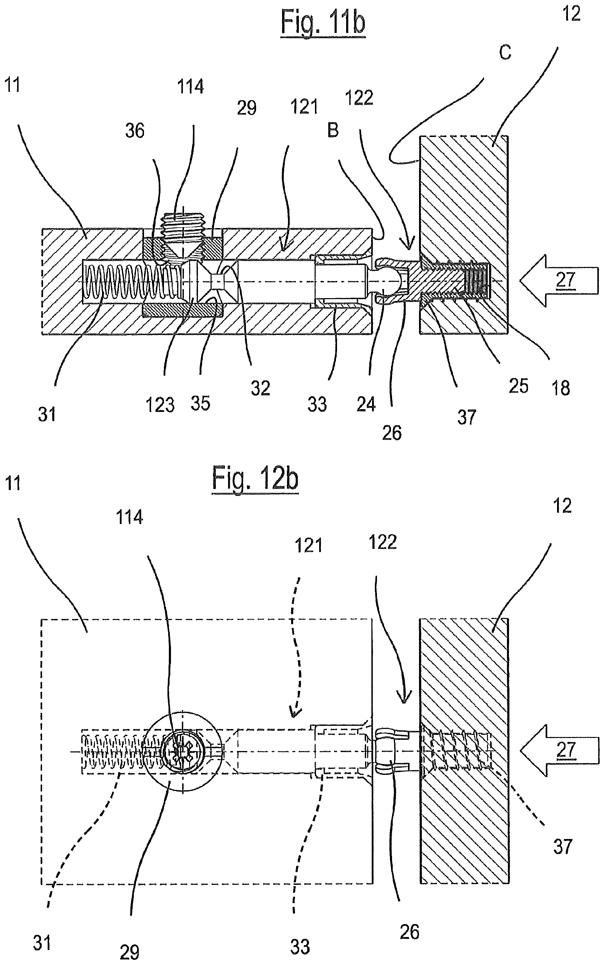

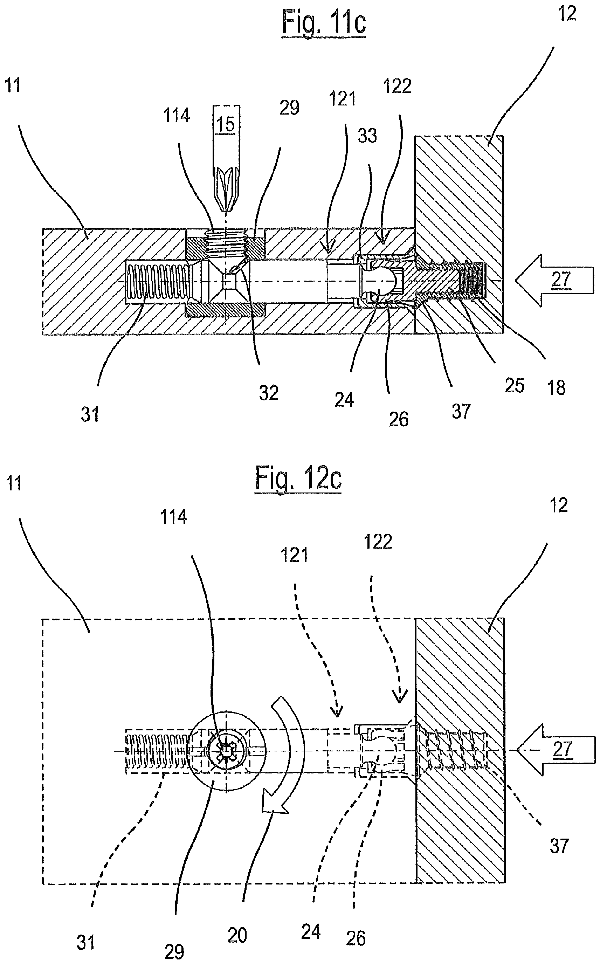

Figures 11 to 14 show a joining device according to the present invention in a second embodiment in which, where possible, the same parts have the same reference numbers or are preceded by an index "1".

It should be noted that said stable connection and blocking system of said pin or plug within said seat, in this non-limiting example, is in the form of a grub screw or headless screw 114 which is screwed into a threaded seat 36 formed inside a barrel 29. The first section 121 of the pin provides that an enlarged end thereof 123 extends into a small portion having a smaller diameter 30 on which one end of a contrast spring 31 inserted in the blind hole 13, is abutted. The enlarged end 123 also provides an annular housing 32 towards the inside of the cylindrical body suitable for receiving the tip of the grub screw 114. The enlarged end 123 is also suitable for passing through a hole 35 formed in the barrel 29 perpendicular to the threaded seat 36 for the grub screw 114.

Furthermore, the cylindrical body of the first section 121 houses in an end section close to the ball 24, a cup-shaped bush 33 centrally provided with a hole 34 for housing a section with a smaller diameter than the cylindrical body of the first section 121 of the pin. The cup-shaped bush 33 is arranged in the initial section or enlarged seat 13' of the first horizontal blind hole 13 of the first panel or base 11 and collaborates in an operating position to receive the hollow petal-shaped element 26 and cause its tightening on the ball 24 of a second section 122 of the pin.

It is further provided that the second section 122 of the pin which comprises the body or threaded stem 25 be screwed into a bush 37, in turn screwed into the hole 18 of the second panel or shoulder 12.

It can thus be understood that in this second embodiment of the joining device, the contrast spring 31 favours the coupling between the sections 121, 122 of the pin or plug.

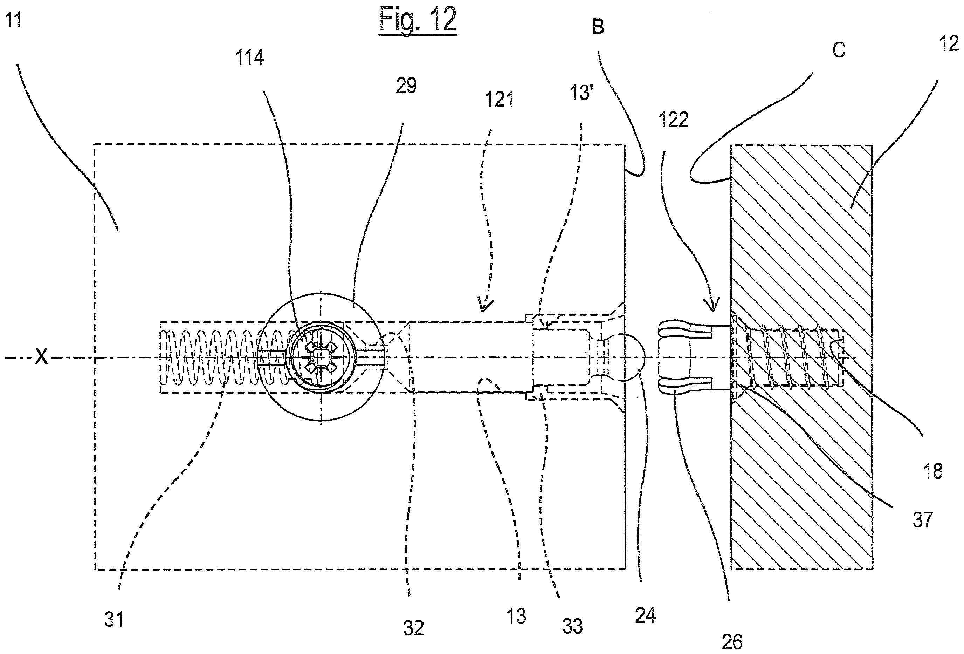

From this position shown in figures 11 and 12, the panels 11, 12 are brought together along an alignment axis X of the holes 13, 18 produced therein, acting according to the arrow 27.

The first section 121 of the pin does not move back into the hole 13 in this case, thanks to the provision of the contrast spring 31, when it receives the hollow petal-shaped element 26 of the second section 122 during the coupling step. The action according to the arrow 27 thus continues to cause the engagement of the hollow petal-shaped element 26 on the ball 24 of the second pin section 122 (figures 11b and 12b), which is snap-inserted therein.

This coupling step is followed by a tightening step of the joining device in which, as the panels 11, 12 are moved together according to the arrow 27, the hollow petal-shaped element 26 containing the ball 24 enters the initial portion 13' of the first horizontal blind hole 13 of the first panel or base 11 positioned within the cup-shaped bush 33 which causes and guarantees the tightening of the hollow petal-shaped element 26 on the ball 24.

This coupling step also causes the positioning of the annular housing 32 of the first section 121 of the pin aligned beneath the threaded seat 36 formed in the barrel 29 thanks to the fact that the contrast spring 31 yields.

At this point, the screwdriver 15, acting on the grub screw 114, causes its rotation according to the arrow 20 so as to bring its tip to be positioned within the annular housing 32 of the first section 121 of the pin.

The actuation of the grub screw 114 pulls the sections 121, 122 of the pin thus coupled, tightening and firmly blocking them due to the fact that the hollow petal-shaped element 26 cannot be released from the ball 24 as it is unable to expand.

The joining device thus acts to firmly abut the edge B of the first panel 11 against the surface C of the second panel 12 creating a stable coupling between the panels 11, 12 (figures 11c and 12c), as for the previous example.

Also in this case, it is equally evident that the sections 121, 122 of the pin can have inverted parts with respect to what is illustrated. One section 122 therefore provides a ball end and the other section 121 an end equipped with a hollow petal-shaped element suitable for receiving the ball by suitably modifying the elements and the parts that collaborate with them. This arrangement, not shown, simply represents a technical equivalent.

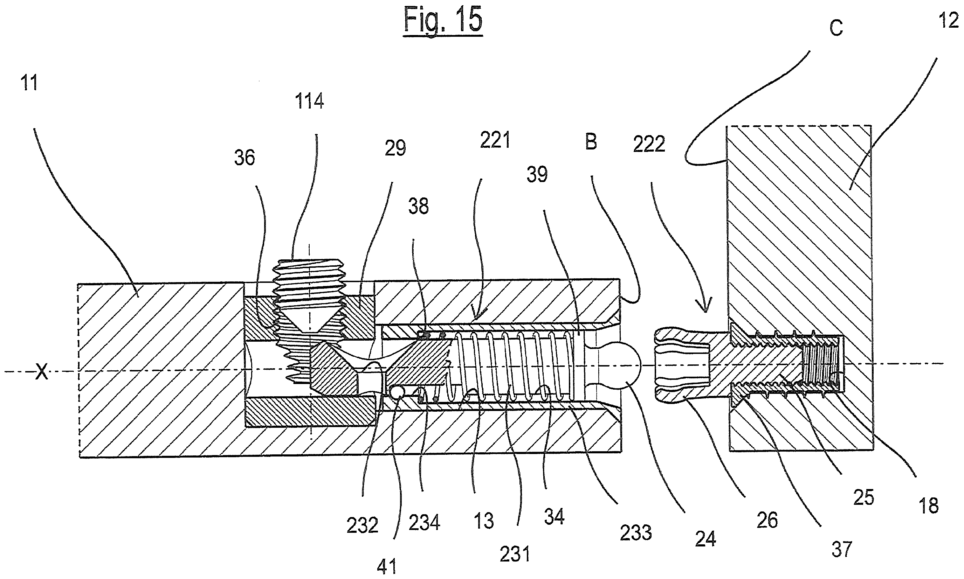

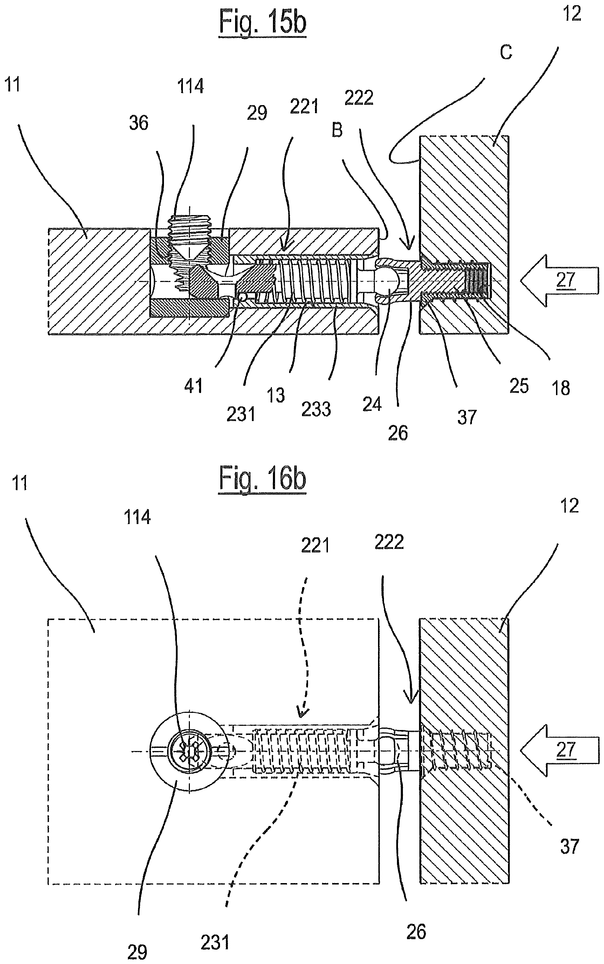

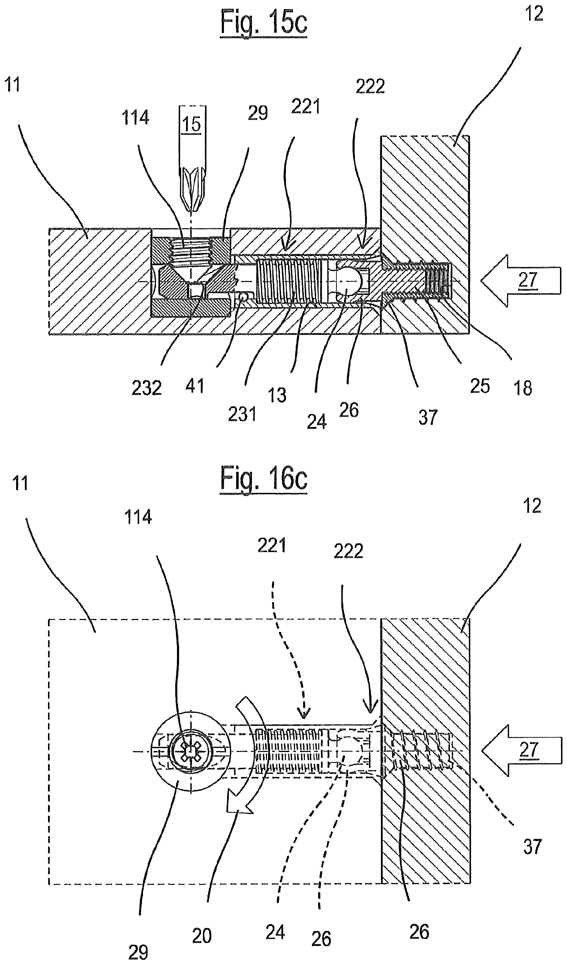

Figures 15 to 18 show a joining device according to the present invention in a third embodiment wherein, where possible, the same parts have the same reference numbers or are preceded by an index "2".

It should be noted that the stable connection and blocking system of said pin or plug within said seat, in this non-limiting example, is again in the form of a grub screw or headless screw 114 which is screwed into a threaded seat 36 formed inside a barrel 29. A first section 221 of the pin provides that just before one of its ends 223, there is a flared housing 232 suitable for receiving the tip of the grub screw 114.

The first hole 13 of the first horizontal panel or base 11 has a larger diameter than that of the first cylindrical section 221 as it also receives a bush 233. The bush 233 has, at one end facing the inside of the hole 13 of the panel, a hole 234 having a smaller diameter than the remaining part, creating an undercut 38. A contrast spring 231, positioned coaxially with respect to the cylindrical body of the first section 221 of the pin, is abutted between said undercut 38 and an annular projection 39, formed before the ball 24 and protruding radially outwards.

The bush 233 therefore contains in its interior both part of the first section 221 of the pin and the spring 231.

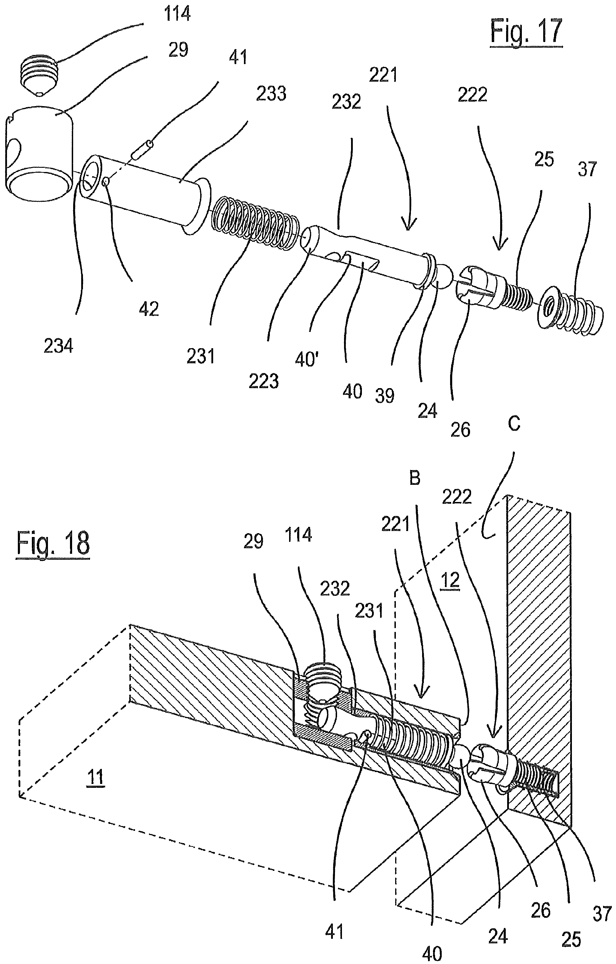

In particular, figures 17 and 18 also show how the cylindrical body of the first section 221 of the pin provides, on a portion of its side surface, a milled plane 40 with an anti-rotation function. This milled plane 40, in fact, houses a small plug 41 which is inserted in a side hole 42 of the bush 233. It can also be noted how the milled plane 40, in one of its ends 40' facing the grub screw or headless screw 114 of the stable connection and blocking system of the sections 221, 222 of the pin, also defines a stop of the first section 221 of the pin, in rest position.

The small pin 41 and the milled plane 40 are arranged to prevent the rotation of the first section 221 of the pin and leave the grub screw 114 oriented with the respective flared housing 232 of the same section 221.

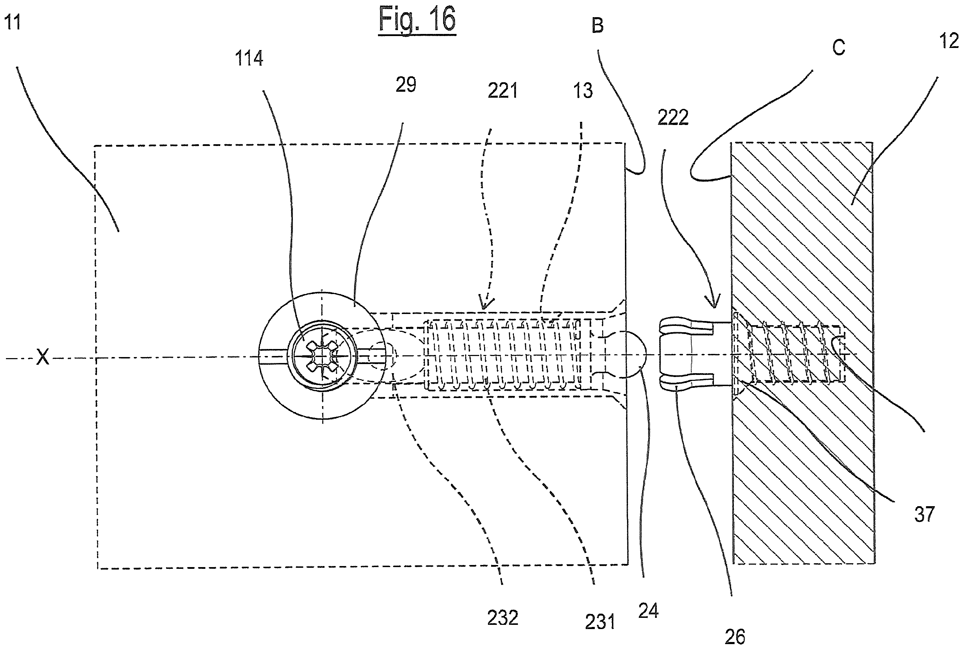

In short, from the position of figures 15 and 16, the panels 11, 12 are brought together along the alignment axis X of the holes 13, 18 formed therein, acting according to the arrow 27.

The first section 221 of the pin is correctly positioned in the hole 13 thanks to the provision of the contrast spring 231, the milled plane 40 and the small plug 41 when it receives, in the coupling step, the hollow petal-shaped element 26 of the second section 222. The action according to the arrow 27 continues so as to cause the engagement of the hollow petal-shaped element 26 on the ball 24 of the second pin section 222 (figures 15b and 16b), which is snap-inserted therein.

This coupling step is followed by a tightening step of the joining device in which, as the panels 11, 12 are brought together according to the arrow 27, the hollow petal-shaped element 26 containing the ball 24 enters the initial portion of the bush 233 which causes and guarantees the tightening of the hollow petal-shaped element 26 on the ball 24.

This coupling step also causes the positioning of the flared housing 232 of the first section 221 of the pin aligned beneath the threaded seat 36 formed in the barrel 29, thanks to the fact that the contrast spring 231 is packed.

At this point, the screwdriver 15, acting on the grub screw 114 causes its rotation according to the arrow 20 so as to bring its tip to be positioned within the annular housing 232 of the first section 221 of the pin.

The actuation of the grub screw 114 pulls the sections 221, 222 of the pin thus coupled, tightening and firmly blocking them due to the fact that the hollow petal-shaped element 26 cannot be released from the ball 24 as it is unable to expand.

The joining device thus acts to firmly abut the edge B of the first panel 11 against the surface C of the second panel 12 creating a stable coupling between the panels 11, 12 (figures 15c and 16c), as for the previous example.

Also in this case, it is equally evident that the sections 221, 222 of the pin can have inverted parts with respect to what is illustrated. One section 222 therefore provides a ball end and the other section 221 an end equipped with a hollow petal-shaped element suitable for receiving the ball by suitably modifying the elements and the parts that collaborate with them. This arrangement, not shown, simply represents a technical equivalent.

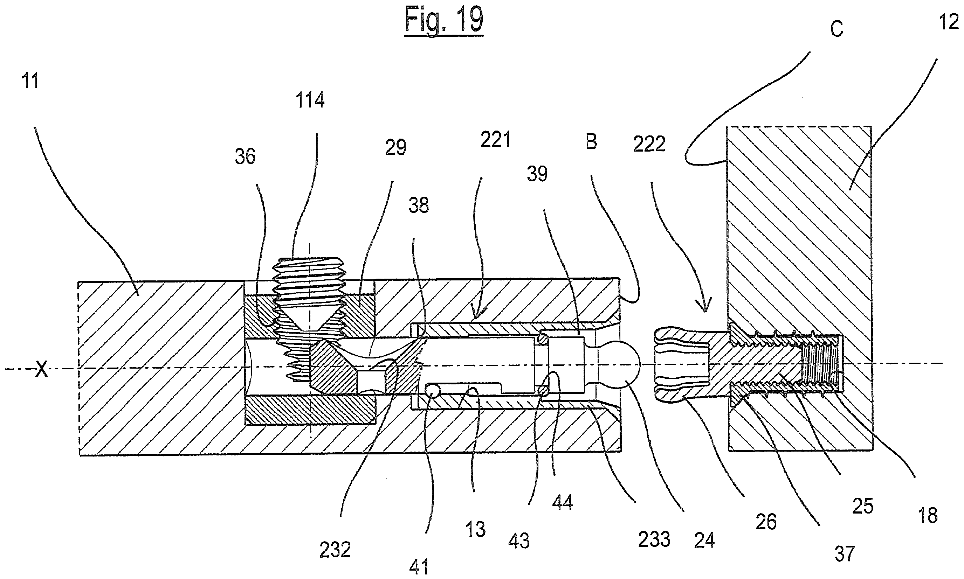

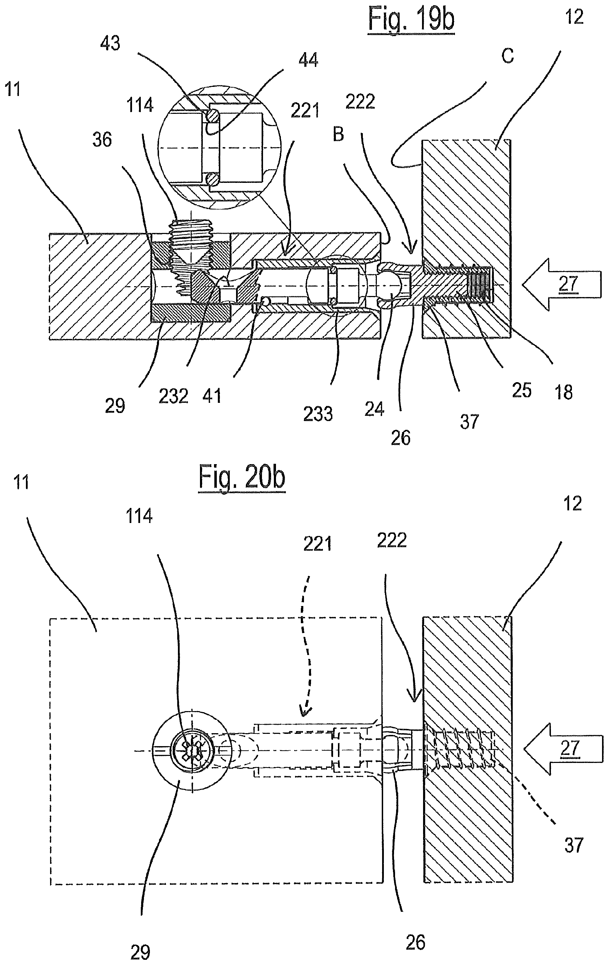

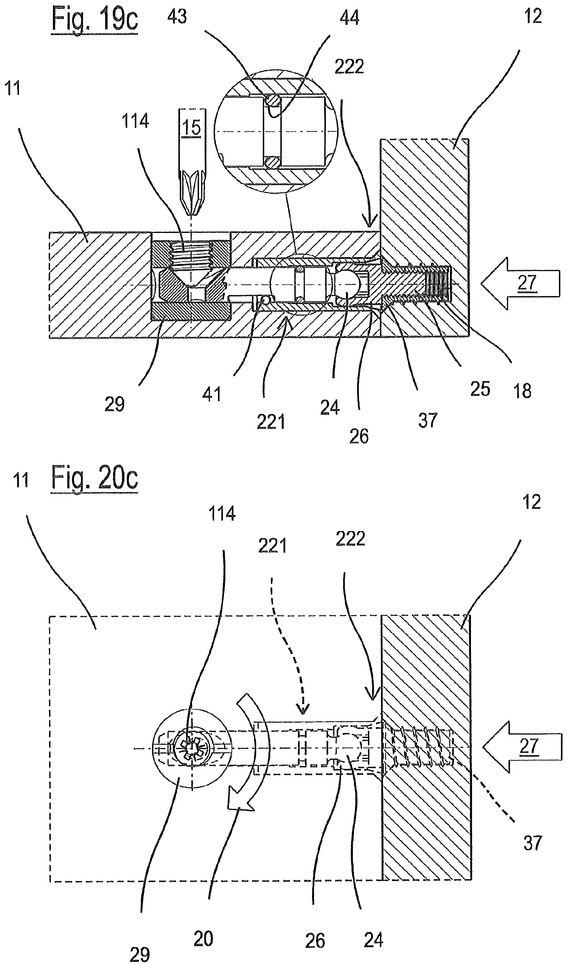

Figures 19 to 22 show a joining device according to the present invention in a fourth embodiment in some ways representing a variant of the third embodiment. Here again, therefore, where possible, the same parts have the same reference numbers.

In this further example, the contrast spring coaxial to the first section 221 of the pin is not present.

The first section 221 of the pin does not move back in the coupling step, thanks to the presence of a yielding ring 43 arranged in a recessed annular seat 44 formed on the cylindrical body of the first section 221 of the pin in a section not far from the end bearing the ball 24.

Accordingly, the spring is not required in this embodiment.

The assembly is almost the same as in the previous embodiment example.

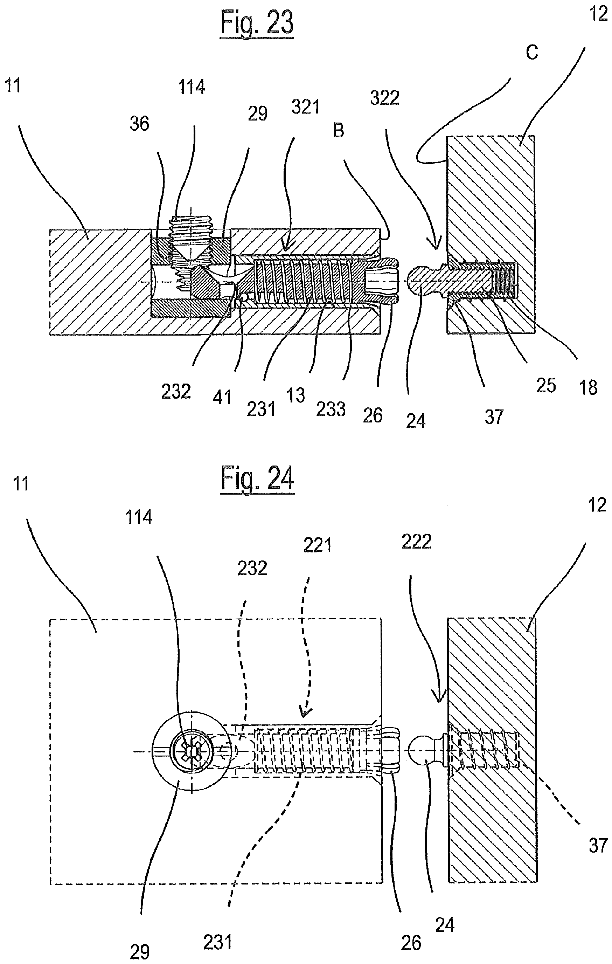

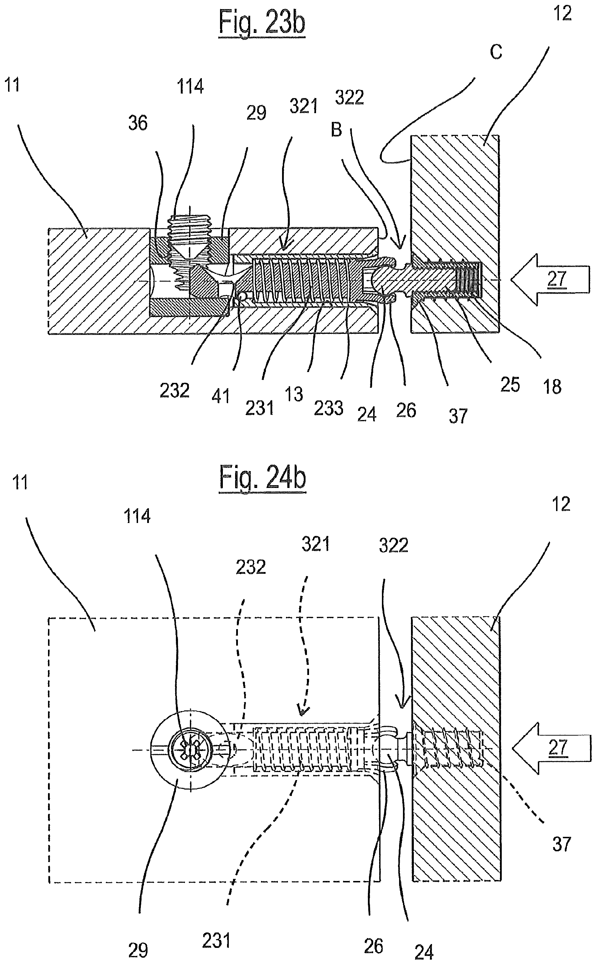

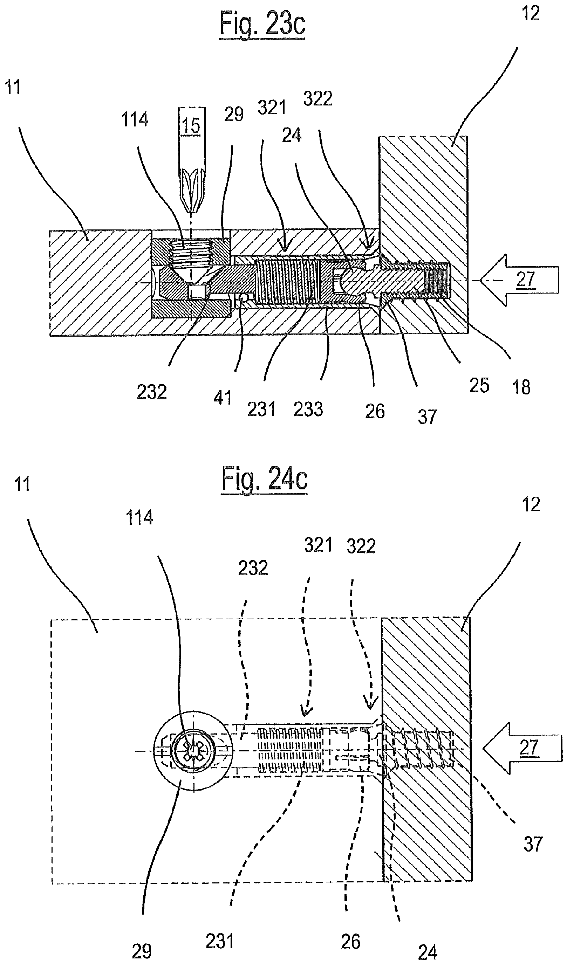

Figures 23 to 26 show a joining device according to the present invention in a fifth embodiment, also in some ways representing a variant of the device of figures 15 to 18.

As previously indicated, in this example, the ball 24 and the hollow petal-shaped element 26 are arranged in an inverted position with respect to the previous examples.

The sections 321, 322 of the pin, in fact, carry, the former, 321, a female part comprising the hollow petal-shaped element 26 and the latter, 322, a male part comprising the ball 24.

The other elements and details are completely identical to those described for the third embodiment of the previous figures 15-18.

The hollow petal-shaped element 26, for example, can be screwed onto the remaining part of the section 321, if the material of the section is different from that of said hollow petal-shaped element 26.

In this case, once the ball 24 of the second section 322 has been received, the hollow petal-shaped element 26 is sent back into the bush 233 with a definitive and complete blocking between the parts.

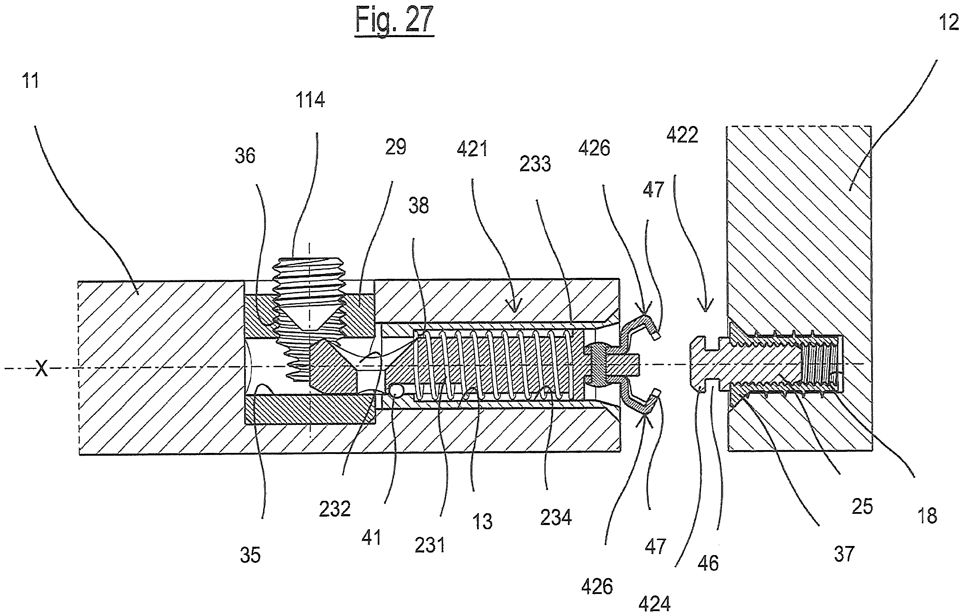

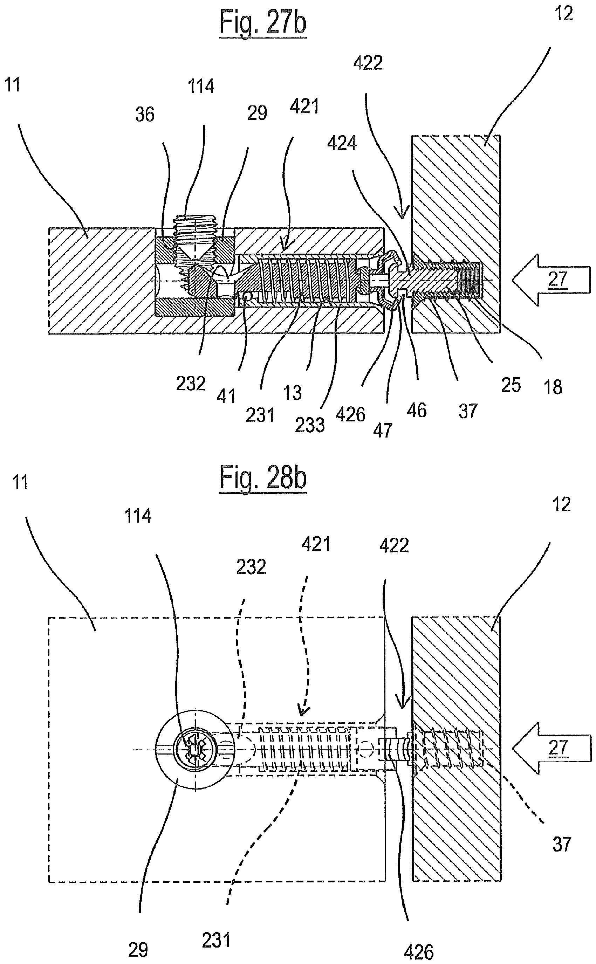

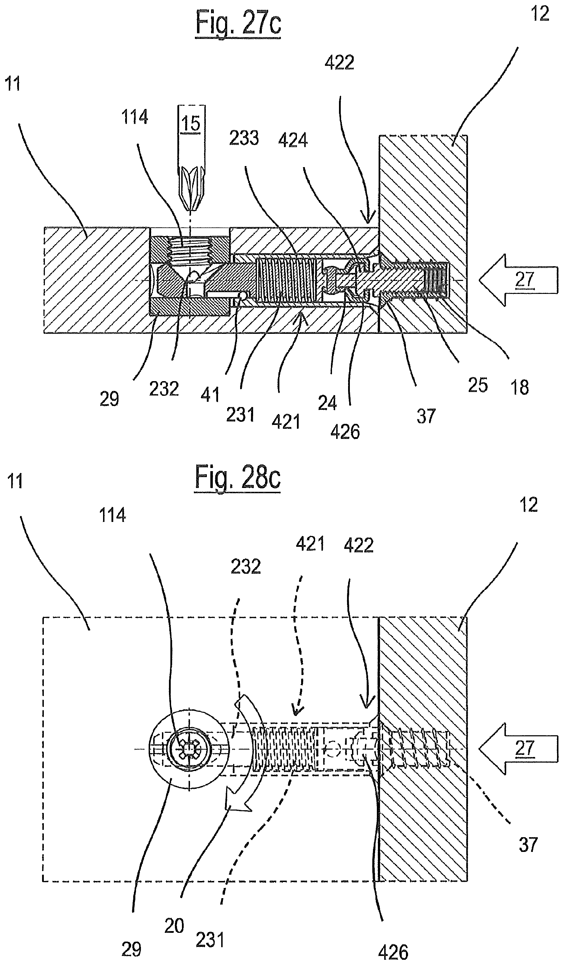

Figures 27 to 30 show a joining device according to an example not according to the invention, in some ways representing a variant of the device of figures 23 to 26, also having features of other embodiments (figures 15-18).

Also in this case, where possible, the same parts have the same reference numbers or are preceded by an index "4" and the joining device of the example not according to the invention is characterized in that said pin or plug is divided into two sections 421, 422, a first section 421 provided on the first panel 11 and a second section 422 provided on the second panel 12.

Figures 27 to 30 show how in this example of a joining device not according to the invention, the first section 421 of the pin consists of a female part at least partially inserted in the first horizontal blind hole 13 of the first panel or base 11. Likewise, the second section 422 of the pin consists of a male part which is at least partially inserted in the blind hole 18 formed in the second panel or shoulder 12, aligned with the first hole 13 of the first panel or base 11.

In particular, the figures show how the first section 421 of the pin comprises a cylindrical element which extends and provides at a first end, a flared housing 232 in which the tip of the grub screw 114 is inserted to obtain blockage between the parts.

At a second end of the first section 421 of the pin, a pair of flexible lamellae 426 are provided, which form the female end part. Furthermore, the second section 422 of the pin comprises a body or threaded stem 25, which is screwed into the second panel or shoulder 12, from which an enlarged circular disk element 424 extends (forming the male part), associated with an annular recess 46 protruding from the shoulder 12 and suitable for receiving the end 47 of the flexible lamellae 426. It has been specified that the lamellae 426 are flexible but they can also be rigid but deformable so as to bend to fit into the annular recess 46, tightening and blocking the second section 422 of the pin.

It should also be noted that the first horizontal blind hole 13 of the first panel or base 11 is such as to receive a bush 233 which is arranged coaxially with the cylindrical element of the first section 421. From figure 27 it can be seen how the cylindrical element of the first section 421 extends in its first end equipped with the flared housing 232 into a hole 35 formed in the barrel 29 perpendicular to the threaded seat 36 for the grub screw 114. Again, an end of the bush 233 is centrally provided with a hole 234 for the passage of the cylindrical element of the first section 421.

The bush 433 is arranged in the initial section of the first horizontal blind hole 13 of the first panel or base 11 and collaborates, in an operating position, to receive the flexible lamellae 426 and cause their tightening on the enlarged circular disk element 424 of the second section 422 of the pin.

There is also the provision that the second section 422 of the pin which comprises the body or threaded stem 25 is screwed into a bush 37 in turn screwed into the hole 18 of the second panel or shoulder 12.

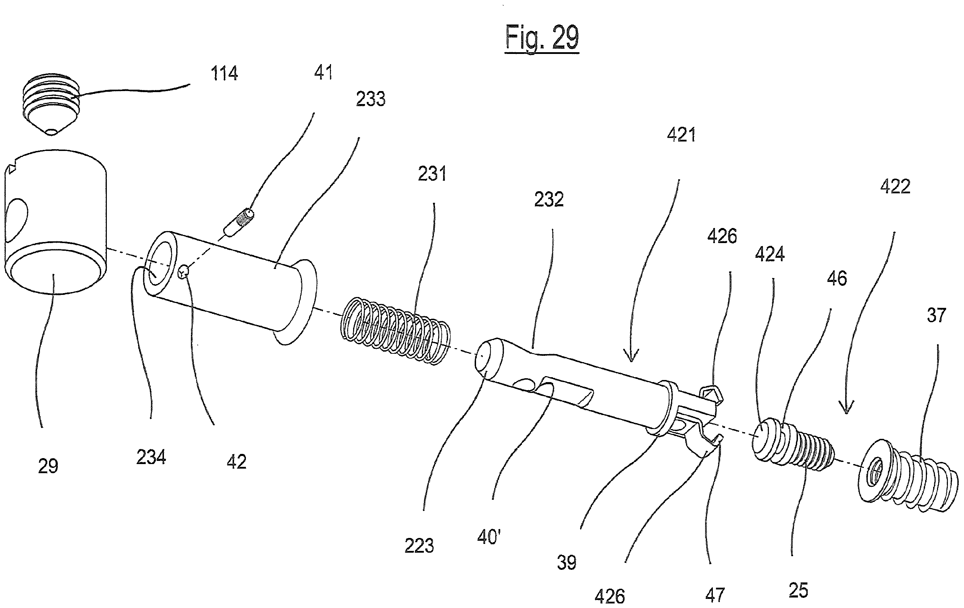

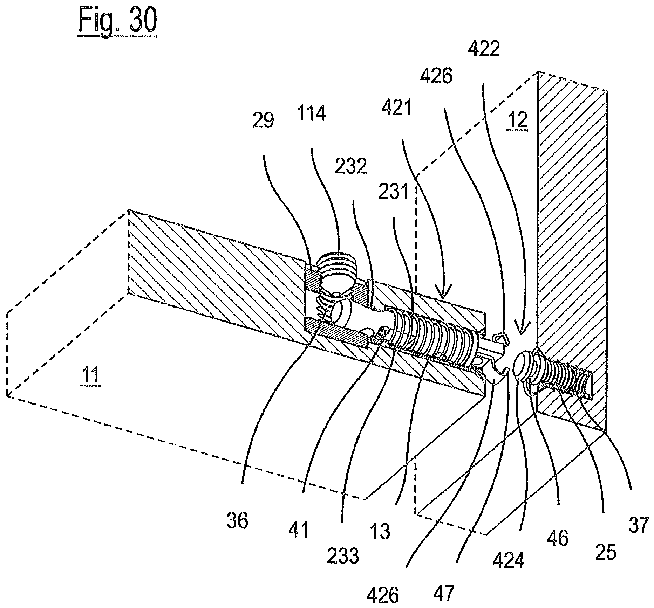

In particular, figures 29 and 30 also show that the cylindrical element of the first section 421 of the pin provides, on a section of its side surface, a milled plane 40 having an anti-rotation function. Said milled plane 40, in fact, houses a small plug 41 which is inserted in a side hole 42 of the bush 233. It should be noted how the milled plane 40, in one of its ends 40' facing the grub screw or headless screw 114 of the stable connection and blocking system of the sections 421, 422 of the pin, also defines a stop of the first section 421 of the pin, in rest position.

The small plug 41 and the milled plane 40 are arranged to prevent rotation of the first section 421 of the pin and leave the flared housing 232 of the same section 421 correctly oriented with the grub screw 114.

As already mentioned, the bush 233 is provided at one end with a hole 234, having a smaller diameter than the remaining part, which thus creates an undercut 38. A contrast spring 231, positioned coaxially with respect to the cylindrical element of the first section 421 of the pin, is abutted between said undercut 38 and an annular projection 39, obtained before the pair of flexible lamellae 426 which form the female end part.

The bush 233 therefore contains in its interior, both part of the first section 421 of the pin and the spring 231.

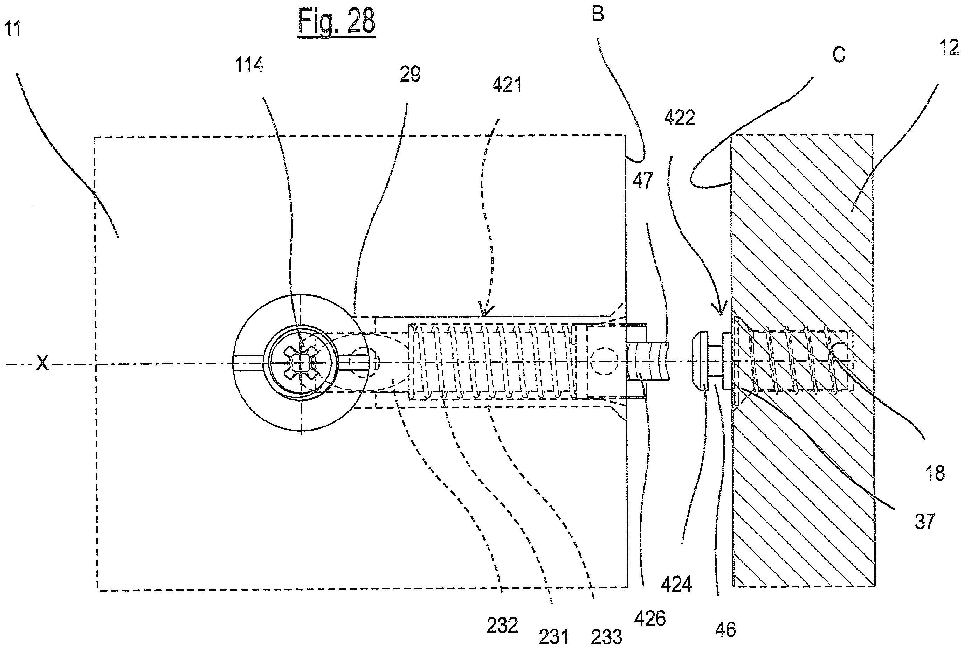

In short, from the position of figures 27 and 28, the panels 11, 12 are brought together along the alignment axis X of the holes 13, 18 produced therein, acting according to the arrow 27.

The first section 421 of the pin is correctly positioned in the hole 13 thanks to the provision of the contrast spring 231, the milled plane 40 and the small plug 41 when it receives the enlarged circular disk element 424 during the coupling between the pair of lamellae 426 with the associated annular recess 46 of the second section 422 of the pin protruding from the shoulder 12.

The action according to the arrow 27 continues so as to cause the engagement of the enlarged circular disk element 424 with the associated annular recess 46 of the second section 422 of the pin between the pair of flexible lamellae 426 of the first section 422 of the pin (figures 27b and 28b), which begin to become positioned in the annular recess 46 of the second section 422.

As for previous examples, this coupling step is followed by a tightening step of the joining device in which, as the panels 11, 12 continue to be brought together according to the arrow 27, the pair of lamellae 426 containing the enlarged circular disk element 424 enters the initial section of the bush 233 which causes and guarantees the tightening of the pair of lamellae 426 on said enlarged disk element 424.

This coupling step also causes the positioning of the flared housing 232 of the first section 221 of the pin aligned below the threaded seat 36 obtained in the barrel 29 thanks to the fact that the contrast spring 231 is packed.

At this point the screwdriver 15 acting on the grub screw 114 causes its rotation according to the arrow 20 so as to bring its tip to be positioned within the annular housing 232 of the first section 221 of the pin.

The actuation of the grub screw 114 pulls the sections 221, 222 of the pin thus coupled, tightening and blocking them stably due to the fact that the pair of lamellae 426 cannot be released from the enlarged circular disk element 424 as it is unable to expand.

The joining device thus acts to firmly abut the edge B of the first panel 11 against the surface C of the second panel 12 creating a stable coupling between the panels 11, 12 (figures 27c and 28c).

From these examples described and illustrated, it can be seen that a joining device according to the invention perfectly achieves the objectives indicated.

It can also be noted how a joining device according to the invention is such as to allow the immediate and automatic positioning and blockage between the parts in which it is inserted.

It should also be pointed out that a device of this kind functions perfectly also for normal applications that do not require limited positioning and assembly spaces between the parts.

It is thus evident that a device according to the invention is extremely simple and functional.

Furthermore, this device is suitable for front actuation and can be positioned in extremely small spaces between the furniture and the floor or ceiling and the side walls of a recess.

The arrangement of suitable actuation and motion transmission rods allows the device to be activated both in a front and rear position of the furniture.

The forms and structure for the production of a joining device according to the present invention, as also the materials and assembly modes, can naturally differ from those shown by way of non-limiting example in the drawings.

The objectives mentioned in the preamble of the description have thus been achieved.

The protection scope of the present invention is defined by the enclosed claims.

## Claims

1. A joining device arrangeable between two panels of furniture or other furnishing items, one (11) positioned perpendicular to the other (12), the joining device comprising a pin or plug which can extended from the second panel (11,12) and which can be inserted in a complementary seat of the first panel (12,11), a stable connection and blocking system (14,114) of said pin or plug which can be provided inside said seat, with an edge (B) of the first panel (11) firmly abutted against a surface (C) of the other panel (12), wherein said pin or plug is divided into two sections, a first section (121, 221, 321) which can be provided on the first panel (11,12) and a second section (122, 222, 322) which can be provided on the second panel (12,11), the first and second sections being releasably and axially (X) intercoupled with each other, wherein said first section (121, 221, 321) comprises a male part which can be provided on said first panel (11,12) and said second section (122, 222, 322) comprises a female part which can be provided on said second panel (12, 11) suitable for being intercoupled, said male part of said first section (121,221,322, 422) provides a ball (24) and said female part of said second section (122,222,322) provides a hollow petal-shaped element (26) suitable for receiving said ball (24), wherein said first section (121; 221; 321) which can be arranged on said first panel (11) has a cylindrical body, the joining device being **characterized in that** said stable connection and blocking system being in the form of a grub screw or headless screw (114) interacting with a housing (32,232) formed in said cylindrical body of said first section (121; 221; 321).

2. The joining device according to claim 1, **characterized in that** said hollow petal-shaped element (26) is preferably elastic so as to snap-receive said ball (24).

3. The joining device according to claim 1 or 2, **characterized in that** said hollow petal-shaped element (26) which extends from a second panel (12, 11) is inserted in an enlarged seat (13') of or in a socket (33,233) inserted in said fist panel (11, 12).

4. The joining device according to one or more of the previous claims, **characterized in that** said first section (21,121,221,321) arranged on said first panel (11) has a cylindrical body, of which an end cooperates with said stable connection and blocking system (14,114) positioned in said first panel (11).

5. The joining device according to claim 4, **characterized in that** said stable connection and blocking system is in the form of an eccentric junction (14) interacting with an enlarged end (23) of said first section (121; 221).

6. The joining device according to one or more of the previous claims, **characterized in that** a contrast spring (31,231) is associated with said cylindrical body of said first section (121; 221; 321) positioned on said first panel (11) .

7. The joining device according to one or more of the previous claims, **characterized in that** said first section (221; 321) arranged on said first panel (11) has a cylindrical body which, on a portion of its side surface has a milled plane (40) with an anti-rotation function, said milled plane (40) housing a plug (41) which fits into a side hole (42) of a socket (233) housed in said hole (13) of said first panel (11) and housing said first section (221; 321).

8. The joining device according to claim 7, **characterized in that** a contrast spring (231) is positioned coaxially with respect to said cylindrical body of said first section (221; 321).

9. The joining device according to claim 7, **characterized in that** a yielding ring (43) is positioned in a recessed annular seat (44) formed in said cylindrical body of said first section (221; 321).

10. The joining device according to one or more of the previous claims, **characterized in that** said first panel (11) is a horizontal panel and said second panel (12) is a vertical panel.

## Patentansprüche

1. Verbindungsvorrichtung, die zwischen zwei Platten von Möbeln oder anderen Einrichtungsgegenständen angeordnet werden kann, von denen eine (11) senkrecht zur anderen (12) positioniert ist, wobei die Verbindungsvorrichtung einen Stift oder Zapfen, der sich von der zweiten Platte (11, 12) aus erstrecken kann und der in einen komplementären Sitz der ersten Platte (12, 11) eingeführt werden kann, sowie ein stabiles Verbindungs- und Blockiersystem (14, 114) des Stifts oder Zapfens umfasst, das innerhalb des Sitzes vorgesehen werden kann, wobei ein Rand (B) der ersten Platte (11) fest gegen eine Oberfläche (C) der anderen Platte (12) anliegt, wobei der Stift oder Zapfen in zwei Abschnitte unterteilt ist, einen ersten Abschnitt (121, 221, 321), der an der ersten Platte (11, 12) vorgesehen werden kann, und einen zweiten Abschnitt (122, 222, 322), der an der zweiten Platte (12, 11) vorgesehen werden kann, wobei der erste und der zweite Abschnitt lösbar und axial (X) miteinander gekoppelt sind,
wobei der erste Abschnitt (121, 221, 321) ein Steckteil umfasst, das an der ersten Platte (11, 12) vorgesehen werden kann, und der zweite Abschnitt (122, 222, 322) ein Buchsenteil umfasst, das an der zweiten Platte (12, 11) vorgesehen werden kann, und die geeignet sind, miteinander gekoppelt zu werden, wobei das Steckteil des ersten Abschnitts (121, 221, 322, 422) eine Kugel (24) bereitstellt und das Buchsenteil des zweiten Abschnitts (122, 222, 322) ein hohles blütenblattförmiges Element (26) bereitstellt, das geeignet ist, die Kugel (24) aufzunehmen,
wobei der erste Abschnitt (121; 221; 321), der auf der ersten Platte (11) angeordnet werden kann, einen zylindrischen Körper aufweist, wobei die Verbindungsvorrichtung **dadurch gekennzeichnet ist, dass** das stabile Verbindungs- und Blockiersystem in Form einer Madenschraube oder eines Gewindestifts (114) vorliegt, die/der mit einem Gehäuse (32, 232) zusammenwirkt, das in dem zylindrischen Körper des ersten Abschnitts (121; 221; 321) ausgebildet ist.

2. Verbindungsvorrichtung nach Anspruch 1, **dadurch gekennzeichnet, dass** das hohle blütenblattförmige Element (26) vorzugsweise elastisch ist, so dass es die Kugel (24) schnappend aufnimmt.

3. Verbindungsvorrichtung nach einem der Ansprüche 1 oder 2, **dadurch gekennzeichnet, dass** das hohle, blütenblattförmige Element (26), das sich von einer zweiten Platte (12, 11) aus erstreckt, in einen vergrößerten Sitz (13') von einem oder in einen Sockel (33, 233) eingesetzt ist, der in die erste Platte (11, 12) eingesetzt ist.

4. Verbindungsvorrichtung nach einem der vorhergehenden Ansprüche,
**dadurch gekennzeichnet, dass** der erste Abschnitt (21, 121, 221, 321), der an der ersten Platte (11) angeordnet ist, einen zylindrischen Körper aufweist, von dem ein Ende mit dem stabilen Verbindungs- und Blockiersystem (14, 114) zusammenwirkt, das in der ersten Platte (11) angeordnet ist.

5. Verbindungsvorrichtung nach Anspruch 4, **dadurch gekennzeichnet, dass** das stabile Verbindungs- und Blockiersystem die Form einer exzentrischen Verbindung (14) hat, die mit einem vergrößerten Ende (23) des ersten Abschnitts (121; 221) zusammenwirkt.

6. Verbindungsvorrichtung nach einem der vorhergehenden Ansprüche,
**dadurch gekennzeichnet, dass** eine Gegenfeder (31, 231) mit dem zylindrischen Körper des ersten Abschnitts (121; 221; 321) verbunden ist, die auf der ersten Platte (11) angeordnet ist.

7. Verbindungsvorrichtung nach einem der vorhergehenden Ansprüche,
**dadurch gekennzeichnet, dass** der erste Abschnitt (221; 321), der auf der ersten Platte (11) angeordnet ist, einen zylindrischen Körper aufweist, der auf einem Teil seiner Seitenfläche eine gefräste Ebene (40) mit einer VErdrehverhinderungsfunktion aufweist, wobei die gefräste Ebene (40) einen Stopfen (41) aufnimmt, der in ein Seitenloch (42) eines Sockels (233) passt, der in dem Loch (13) der ersten Platte (11) untergebracht ist und den ersten Abschnitt (221; 321) aufnimmt.

8. Verbindungsvorrichtung nach Anspruch 7, **dadurch gekennzeichnet, dass** eine Gegenfeder (231) koaxial zu dem zylindrischen Körper des ersten Abschnitts (221; 321) angeordnet ist.

9. Verbindungsvorrichtung nach Anspruch 7, **dadurch gekennzeichnet, dass** ein nachgiebiger Ring (43) in einem ausgenommenen Ringsitz (44) angeordnet ist, der in dem zylindrischen Körper des ersten Abschnitts (221; 321) ausgebildet ist.

10. Verbindungsvorrichtung nach einem der vorhergehenden Ansprüche,
**dadurch gekennzeichnet, dass** die erste Platte (11) eine horizontale Platte ist und die zweite Platte (12) eine vertikale Platte ist.

## Revendications

1. Dispositif d'assemblage pouvant être disposé entre deux panneaux de meuble ou d'autres articles d'ameublement, l'un (11) positionné perpendiculairement à l'autre (12), le dispositif d'assemblage comprenant une broche ou une fiche qui peut étendu à partir du second panneau (11, 12) et qui peut être insérée dans un siège complémentaire du premier panneau (12,11), un système de connexion et de blocage stable (14, 114) de ladite broche ou fiche qui peut être prévu à l'intérieur dudit siège, avec un bord (B) du premier panneau (11) fermement en butée contre une surface (C) de l'autre panneau (12), dans lequel ladite broche ou fiche est divisée en deux sections, une première section (121, 221, 321) qui peut être prévue sur le premier panneau (11, 12) et une seconde section (122, 222, 322) qui peut être prévue sur le second panneau (12, 11), les première et seconde sections étant intercouplées axialement (X) et de manière libérable l'une à l'autre, dans lequel ladite première section (121, 221, 321) comprend une partie mâle qui peut être prévue sur ledit premier panneau (11, 12) et ladite seconde section (122, 222, 322) comprend une partie femelle qui peut être prévue sur ledit second panneau (12, 11) appropriées pour être intercouplées, ladite partie mâle de ladite première section (121, 221, 322, 422) présente une boule (24) et ladite partie femelle de ladite seconde section (122, 222, 322) présente un élément creux en forme de pétale (26) adapté pour recevoir ladite boule (24), dans lequel ladite première section (121 ; 221 ; 321) qui peut être disposée sur ledit premier panneau (11) comporte un corps cylindrique, le dispositif d'assemblage étant **caractérisé en ce que** ledit système de connexion et de blocage stable se présente sous la forme d'un tourillon sans tête ou d'une vis sans tête (114) interagissant avec un boîtier (32, 232) formé dans ledit corps cylindrique de ladite première section (121 ; 221 ; 321).

2. Dispositif d'assemblage selon la revendication 1, **caractérisé en ce que** ledit élément creux en forme de pétale (26) est de préférence élastique de manière à recevoir par encliquetage ladite boule (24).

3. Dispositif d'assemblage selon la revendication 1 ou 2, **caractérisé en ce que** ledit élément creux en forme de pétale (26) qui s'étend à partir d'un second panneau (12, 11) est inséré dans un siège élargi (13') de ou dans une douille (33,233) insérée dans ledit premier panneau (11, 12).

4. Dispositif d'assemblage selon une ou plusieurs des revendications précédentes, **caractérisé en ce que** ladite première section (21,121, 221, 321) agencée sur ledit premier panneau (11) comporte un élément cylindrique dont une extrémité coopère avec ledit système de connexion et de blocage stable (14, 114) positionné dans ledit premier panneau (11).

5. Dispositif d'assemblage selon la revendication 4, **caractérisé en ce que** ledit système de connexion et de blocage stable se présente sous la forme d'une jonction excentrique (14) interagissant avec une extrémité élargie (23) de ladite première section (121 ; 221).

6. Dispositif d'assemblage selon une ou plusieurs des revendications précédentes, **caractérisé en ce qu'**un ressort de contraste (31, 231) est associé audit corps cylindrique de ladite première section (121 ; 221 ; 321) positionné sur ledit premier panneau (11).

7. Dispositif d'assemblage selon une ou plusieurs des revendications précédentes, **caractérisé en ce que** ladite première section (221 ; 321) disposée sur ledit premier panneau (11) comporte un corps cylindrique qui, sur une partie de sa surface latérale, comporte un plan fraisé (40) avec une fonction anti-rotation, ledit plan fraisé (40) logeant une fiche (41) qui s'ajuste dans un trou latéral (42) d'une douille (233) logée dans ledit trou (13) dudit premier panneau (11) et logeant ladite première section (221 ; 321).

8. Dispositif d'assemblage selon la revendication 7, **caractérisé en ce qu'**un ressort de contraste (231) est positionné coaxialement par rapport audit corps cylindrique de ladite première section (221 ; 321).

9. Dispositif d'assemblage selon la revendication 7, **caractérisé en ce qu'**un anneau élastique (43) est positionné dans un siège annulaire encastré (44) formé dans ledit corps cylindrique de ladite première section (221 ; 321).

10. Dispositif d'assemblage selon une ou plusieurs des revendications précédentes, **caractérisé en ce que** ledit premier panneau (11) est un panneau horizontal et ledit second panneau (12) est un panneau vertical.
